Europäisches Patentamt

European Patent Office

Office européen des brevets

(19)

(11) Veröffentlichungsnummer: **0 278 252 B1**

## (12) EUROPÄISCHE PATENTSCHRIFT

(45) Veröffentlichungstag der Patentschrift: **17.07.91**

(21) Anmeldenummer: **88100500.3**

(22) Anmeldetag: **15.01.88**

(51) Int. Cl.⁵: **E04B 1/41**, F16B 35/06,
F16B 37/04

(54) **Ankerschiene.**

(30) Priorität: **21.01.87 DE 3701530**

(43) Veröffentlichungstag der Anmeldung:
**17.08.88 Patentblatt 88/33**

(45) Bekanntmachung des Hinweises auf die
Patenterteilung:
**17.07.91 Patentblatt 91/29**

(84) Benannte Vertragsstaaten:
**AT BE CH DE ES FR GB IT LI NL SE**

(56) Entgegenhaltungen:
**DE-A- 2 164 991
US-A- 2 928 512**

(73) Patentinhaber: **Unistrut Europe PLC
Edison Road Elms Industrial Estate
Bedford MK41 OHU(GB)**

(72) Erfinder: **Die Erfinder haben auf ihre Nennung verzichtet**

(74) Vertreter: **Jackisch, Walter, Dipl.-Ing. et al
Patentanwalt W. Jackisch & Partner Menzelstrasse 40
W-7000 Stuttgart 1(DE)**

## Beschreibung

Die Erfindung betrifft eine mit einem Längsschlitz versehene Ankerschiene mit hohlprofilartigem Querschnitt und je einer zu beiden Längsseiten des Schlitzes vorgesehenen Reihe von Rastaufnahmen für den formschlüssigen Eingriff von Gegenrastern eines den Schlitz vom Inneren der Ankerschiene her abdeckenden Befestigungsteiles sowie einem diesem Befestigungsteil zugeordneten Schraubenbolzen.

Bei einer bekannten Ankerschiene dieser Art (US-A-2 928 512) sind die an beiden Längskanten des Schlitzes vorgesehenen Rastaufnahmen in Form einer Zahnreihe ausgebildet. Mit dieser Zahnreihe wirkt eine Platte mit gleicher Verzahnung zusammen, die lose auf einem den Schlitz abdeckenden Befestigungsteil, nämlich einem verbreiterten Kopf des in den Schlitz eingeführten Schraubenbolzens aufliegt. Somit kann der in den Hohlraum der Ankerschiene eingeschobene Schraubenbolzen mit seinem den Schlitz abdeckenden Kopf und der aufgelegten, mit einer Zahnreihe versehenen Rastplatte an einer gewünschten Befestigungsstelle der Ankerschiene verrastet und in dieser Stellung mittels der auf den Schraubbolzen aufgeschraubten Mutter fixiert werden. Dabei greift die verzahnte Platte mit ihren Zähnen formschlüssig in die benachbarten seitlichen Zähne der Zahnleiste der Ankerschiene ein. Nachteilig ist hier, daß die Rastzähne nur auf einer Längskante der Schiene vorgesehen sind, so daß der unter Last stehende Schraubbolzen gegen Längsverschiebung nur auf einer Seite formschlüssig gesichert ist. Darüber hinaus ist der Schraubbolzen bei Zugbeanspruchung - also bei Zugkräften, die in seiner Achsrichtung wirken - durch die Verzahnung nur unvollkommen mittels der in der Schiene eingesetzten Gegenplatte gesichert. Beim Auftreten großer Zugkräfte in Richtung des Bolzens können nämlich die sich gegenüberliegenden Seiten der Ankerschiene nach außen aufbiegen. Da der Schraubbolzen bei derartigen Ankerschienen, die beispielsweise in horizontale Decken von Gebäuden einbetoniert werden, vornehmlich in Zugrichtung durch auf den Bolzen aufgesetzte Bauteile beansprucht wird, ist die bekannte Schiene wegen der beschriebenen Nachteile nur begrenzt einsatzfähig.

Der Erfindung liegt die Aufgabe zugrunde, eine Ankerschiene der eingangs erwähnten Art mit ihrer Verzahnung zwischen Schiene und Befestigungselement derart auszubilden, daß eine weitgehend gleich hohe Belastung quer, senkrecht und längs zur Ankerschiene ohne Gefahr des Verrutschens des Befestigungselementes gewährleistet ist.

Diese Aufgabe wird bei einer Ankerschiene nach Gattungsbegriff durch die Merkmale des Kennzeichens des Anspruches 1 gelöst. Mit der erfindungsgemäßen Ausbildung ist eine vollständig formschlüssige Verrastung von Bolzen und Ankerschiene in Längsrichtung geschaffen, so daß bei Beanspruchung des Bolzens auf Zug - also in der am häufigsten auftretenden Beanspruchungsart - eine absolut dichte und formschlüssige Verbindung besteht.

Dadurch daß die Rastausnehmungen in der Ankerschiene aus in Umfangsrichtung geschlossenen Löchern mit auf der Schlitzebene senkrecht stehenden Lochachsen ausgebildet sind und die Gegenraster durch Stifte gebildet werden, die vom Innern der Ankerschiene her in die Löcher eingreifen und das Befestigungsteil den Längsschlitz quer zur Längsachse der Ankerschiene gesehen übergreift, ist eine Ankerschiene geschaffen, die hinsichtlich der Festigkeitseigenschaften und der Stabilität dem eines geschlossenen Hohlprofiles, beispielsweise eines Rohres, entspricht. Bei Belastungen des Bolzens in seiner Achsrichtung, also bei wirkenden Zugkräften, ist die Ankerschiene infolge der durch die Löcher hindurchgreifenden Stifte des Befestigungsteiles sicher gegen wirkende Zug- und Querkräfte verrastet. Die erfindungsgemäß ausgebildete Ankerschiene ist zudem einfach in der Herstellung und leicht zu montieren.

Bei einer besonderen Ausführungsform der Ankerschiene ist der Befestigungsteil eine Rastplatte, die als Hammerkopf des Schraubenbolzens ausgebildet ist, wobei die Stifte auf der dem Gewindeschaft zugewandten Grundseite des Hammerkopfes angeordnet sind. Bei einer solchen Ausführung kann die Rastplatte quer zur Längsrichtung der Ankerschiene eine Länge haben, die größer als die Breite der Längsschiene dieser Ankerschiene ist. Um ein einfaches Montieren der Formschlußverbindung mittels der Stifte und der vorgesehenen Löcher zu erreichen, ist es zweckmäßig, die Stifte an ihren freien Enden verjüngt auszubilden.

In den Zeichnungen ist der Gegenstand der Erfindung dargestellt. Es zeigen

Fig. 1    eine perspektivische Ansicht der erfindungsgemäßen Ankerschiene,

Fig. 2    eine perspektivische Ansicht eines der Ankerschiene nach Fig. 1 zugeordneten Schraubenbolzens.

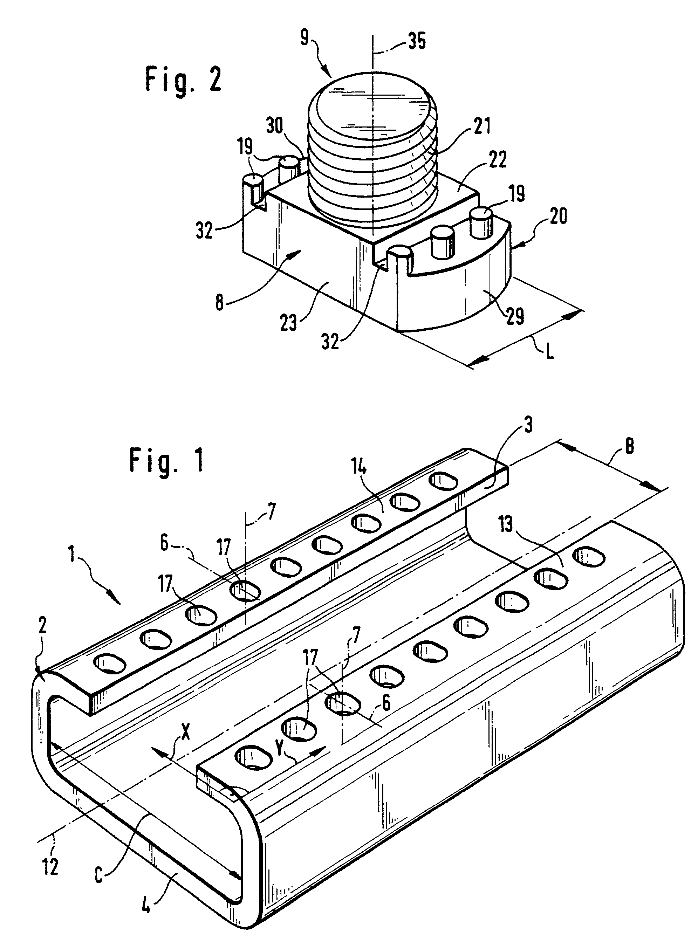

In Fig. 1 ist die aus einem im Querschnitt etwa rechtwinkligen Hohlprofil 2 aus Stahl gebildete Ankerschiene 1 perspektivisch gezeigt. Die Ankerschiene ist etwa C-förmig ausgebildet, wobei die etwa parallel zur Grundfläche des C-Profils liegenden umgebogenen Schenkel in einer Ebene liegen, die durch die Pfeile X, Y angedeutet ist. Zwischen den Schenkeln 13, 14 des etwa C-förmigen Hohlprofils 2 der Ankerschiene befindet sich ein durchgehender Längsschlitz 3, dessen Breite B kleiner als die Breite "C" der durchgehenden Längsseite 4 ist. Beidseitig des Schlitzes 3 liegen somit die Schenkel 13 und 14 in der durch die Pfeile X,Y angedeuteten Ebene. Die Schenkel 13, 14 weisen Rastausnehmungen aus in Umfangsrichtung geschlossenen Löchern mit auf der Schlitzebene 12 senkrecht stehenden Lochachsen 7 auf. Diesen Löchern 17 zugeordnet sind Gegenraster in Form von Stiften 19, die vom Innern der Ankerschiene in die Löcher 17 eingreifen, wobei der Befestigungsteil 8, beispielsweise in Form einer Rastplatte 8, als Hammerkopf 20 eines Schraubenbolzens 9 ausgebildet ist. Die Stifte 19 sind dabei auf der dem Gewindeschaft 21 des Schraubenbolzens 9 zugewandten Grundseite 22 des Hammerkopfes 20 angeordnet. Die Löcher 17 in den Schenkeln 13, 14 können in Draufsicht etwa ovalförmig ausgebildet sein, wobei die größte Achserstreckung dieser Ovalform, nämlich die Achse 6 (vgl. Fig. 1) quer zur Ankerschiene 1 verläuft. Die Bohrungsachsen 7 (Lochachsen) stehen lotrecht auf der durch die beiden Schenkel 13 und 14 bestimmten Schlitzebene 12.

Das in den Hohlraum der Ankerschiene, also in das Innere der Ankerschiene 1, einzusetzende Befestigungselement (beim Ausführungsbeispiel der Schraubenbolzen 9, vgl. Fig. 2) weist eine mit ihm fest verbundene Rastplatte 8 auf, wobei der Hammerkopf 20 des Schraubenbolzens 9 etwa Rechteckform mit abgerundeten Schmalseiten 29, 30 hat. Diese Schmalseiten haben eine Breite L, die gleich oder kleiner der Breite B des Schlitzes 3 ist. Die Längsseiten des Hammerkopfes 20 sind jedoch länger als die Breite B des Schlitzes 3, jedoch kleiner als die innere Breite C des Hohlprofils 2 der Ankerschiene 1.

Die Rastplatte 8 ist beim Ausführungsbeispiel in die dem Gewindeschaft 21 zugewandte Grundseite 22 des Hammerkopfes 20 eingearbeitet, wozu längs jeder Schmalseite eine zur Schmalseite offene Ansenkung 32 mit den Stiften 19 vorgesehen ist. Die Stifte 19 der Rastplatte 8 liegen in einer gemeinsamen Ebene, auf der die Längsmittelachse 35 des Gewindeschaftes 21 lotrecht steht. Der in Richtung der Breitseite 23 des Hammerkopfes 20 gemessene Abstand der sich gegenüberliegenden Stifte 19 entspricht dem quer zur Ankerschiene 1 gemessenen Abstand der Löcher 17.

Durch diese Abstimmung des Schraubenbolzens 9 auf die Maße und Zahnungen der Ankerschiene 1 kann der Hammerkopf 20 mit seiner schmalen Breite durch den Schlitz 3 in das Hohlprofil eingesetzt werden. Durch Drehung des Schraubenbolzens 9 um 90° greift der Hammerkopf 20 unter die Schenkel 13, 14, so daß in dieser Lage bei einrastenden Stiften 19 ein vollständiger Formschluß besteht. Die auf den Schraubenbolzen 9 wirkenden Kräfte werden also durch diesen Formschluß unmittelbar in die Ankerschiene 1 eingeleitet, wobei die quer zur Ankerschiene auf den Schraubenbolzen 9 wirkenden Kräfte ebenso wie solche, die senkrecht zur Ankerschiene auf ihn wirken, unmittelbar in die Ankerschiene selbst eingeleitet werden. Die in allen Richtungen der Ankerschiene sichergestellte hohe Belastungsaufnahme ist beim Ausführungsbeispiel noch dadurch besonders unterstützt, daß der eingerastete Schraubenbolzen 9 mit seinen Stiften 19 und den Löchern 17 in der Ankerschiene eine gemeinsame Ebene bildet. Somit liegt die Rastplatte 8 mit Stiften 19 vollständig in dem Schlitz 3 und füllt diesen derart aus, daß bei eingesetztem Schraubenkopf oder dgl. das Befestigungselement entsprechend dem Kraftverlauf als vollständig geschlossen anzusehen ist. Die Stifte 19 des Schraubenbolzens 9 können an ihrer Spitze verjüngt ausgeführt sein, um das Einfädeln der Stifte 19 in die Löcher zu erleichtern.

**Patentansprüche**

1. Mit einem Längsschlitz (3) versehene Ankerschiene (1) mit hohlprofilartigem Querschnitt und je einer zu beiden Längsseiten des Schlitzes vorgesehenen Reihe von Rastaufnahmen für den formschlüssigen Eingriff von Gegenrastern eines den Schlitz (3) von innen abdeckenden Befestigungsteiles (8) und einem diesem Befestigungsteil zugeordneten Schraubenbolzen (9),
dadurch gekennzeichnet, daß die Rastausnehmungen in der Ankerschiene (1) aus in Umfangsrichtung geschlossenen Löchern (17) mit auf der Schlitzebene (12) senkrecht stehenden Lochachsen (18) ausgebildet sind und die Gegenraster durch Stifte (19) gebildet sind, die vom Innern der Ankerschiene in die Löcher (17) eingreifen und daß der Befestigungsteil (8) den Längsschlitz quer zur Längsachse der Ankerschiene gesehen übergreift.

2. Ankerschiene nach Anspruch 1,
dadurch gekennzeichnet, daß der Befestigungsteil eine Rastplatte (8) ist, die als Hammerkopf (20) des Schraubenbolzens (9) ausgebildet ist, wobei die Stifte (19) auf der dem Gewindeschaft (21) zugewandten Grundseite (22) des Hammerkopfes (20) angeordnet sind.

3. Ankerschiene nach Anspruch 1 oder 2,
dadurch gekennzeichnet, daß die Stifte (19) an ihrem freien Ende verjüngt ausgebildet sind.

**Claims**

1. Anchoring profile (1) provided with a longitudinal slot (3), having a cross-section in the shape of a hollow profile and provided respectively on both longitudinal sides of the slot a row of locking openings for the positive engagement of counter-locking members of a fastening part (8) covering the slot (3) from inside and of a screw bolt (9) associated with this fastening part, characterised in that the locking openings in the anchoring profile (1) are formed by holes (17) closed in the peripheral direction with hole axes (18) perpendicular to the plane of the slot (12) and the counter-locking means are formed by pins (19), which engage in the holes (17) from the inside of the anchoring profile and that the fastening part (8) overlaps the longitudinal slot seen transversely to the longitudinal axis of the anchoring profile.

2. Anchoring profile according to Claim 1, characterised in that the fastening part is a locking plate (8), which is constructed as a hammer head (20) of the screw bolt (9), the pins (19) being located on the bottom side (22) of the hammer head (20) facing the threaded shaft (21).

3. Anchoring profile according to Claims 1 or 2, characterised in that the pins (19) are constructed to taper at their free end.

**Revendications**

1. Rail d'ancrage (1) muni d'une fente longitudinale (3) et présentant une section transversale en forme de profil creux, avec respectivement une rangée de crantages prévue des deux côtés longitudinaux de la fente pour l'engrènement à engagement positif d'éléments d'arrêt conjugués d'un élément de fixation (8) recouvrant la fente (3) à partir de l'intérieur, et un boulon fileté (9) associé audit élément de fixation, **caractérisé en ce** que les crantages dans le rail d'ancrage (1) sont constitués par des trous (17) fermés dans le sens périphérique et présentant des axes de trous (18) placés perpendiculairement sur le plan de fente (12), que les éléments d'arrêt conjugués sont constitués par des broches (19) qui s'engagent dans les trous (17) à partir de l'intérieur du rail d'ancrage, et que l'élément de fixation (8) recouvre la fente longitudinale transversalement à l'axe longitudinal du rail d'ancrage.

2. Rail d'ancrage selon la revendication 1, caractérisé en ce que l'élément de fixation est une plaque d'arrêt (8) qui est conformée en tête rectangulaire (20) du boulon fileté (9), les broches (19) étant disposées sur la face de base (22) de la tête rectangulaire (20) dirigée vers la tige filetée (21).

3. Rail d'ancrage selon l'une des revendications 1 ou 2, caractérisé en ce que les broches (19) présentent à leurs extrémités libres une diminution de diamètre.

Fig. 2

Fig. 1